# FASCICULE DE BREVET EUROPEEN

(11) **EP 2 360 537 B1**
(45) Date de publication et mention de la délivrance du brevet: **09.04.2014**
(21) Numéro de dépôt: 10153597.9
(22) Date de dépôt: 15.02.2010
(51) Int. Cl.: G04B 39/00

(54) **Procede et dispositif de fixation d'une glace avec contre-lame**
Verfahren und Vorrichtung zur Fixierung eines Glases mit Gegenplatte
Method and device for fixing a crystal with counter-blade

(43) Date de publication de la demande: 24.08.2011
(73) Titulaire: ETA SA Manufacture Horlogère Suisse, 2540 Grenchen (CH)
(72) Inventeur: Altenhoven, Thierry, 2830, Courrendlin (CH); Engelmann, Adolph, 3296, Arch (CH); Kroug, Jean-Christophe, 1754, Avry-sur-Matran (CH)
(74) Mandataire: Ravenel, Thierry Gérard Louis

(56) Documents cités:
- EP-A1- 0 568 059
- EP-A1- 0 683 440
- EP-A1- 0 770 937
- CH-A- 250 114
- CH-A- 251 697
- CH-A- 262 326
- CH-A- 273 737
- FR-A- 1 272 508

## Description

La présente invention se rapporte au domaine de l'horlogerie. Elle concerne plus précisément un procédé de fixation d'une lunette sur une montre. L'invention concerne également un dispositif de fixation pour la mise en oeuvre de ce procédé de fixation.

Pour le montage de lunettes et de glaces de montre, on connaît les montages dits à friction, qui nécessitent souvent des joints pour absorber les forces de compression radiales de la glace sur la lunette. Ces méthodes sont souvent utilisées pour les montres haut de gamme utilisant des lunettes en métal et des glaces en matière très dures, comme le corindon ou le saphir, dont le coût de revient est très élevé.

Pour des lunettes et glaces en matière plastique, on connaît des méthodes de montage alternatives au chassage qui utilisent par exemple du collage, du soudage par ultrason, ou encore le crochage - aussi appelé clipsage - d'éléments de fixation par déformation élastique lors du montage. Le collage nécessite toutefois une mise en oeuvre laborieuse pour une production de masse pour un positionnement précis et répété des pièces à monter; le soudage ultrasonique requiert quant à lui de gros investissements. Enfin, le crochage nécessite souvent l'usinage de géométries complexes pour assurer une tenue efficace, et il laisse par ailleurs souvent apparaître rapidement du jeu entre les différents éléments assemblés après le fluage du matériau plastique.

On connaît par ailleurs du document EP0683440 de la demanderesse, une solution de fixation d'une lunette à cran à une glace; toutefois les éléments d'accrochage ne sont pas maintenus en compression en position assemblée, de telle sorte qu'un arrachage de la lunette peut facilement avoir lieu. Un dispositif de fixation similaire d'une glace fixée à une lunette où la lunette est classiquement fixée à cran au boîtier et enveloppe un bord périphérique de la glace est divulgué par le document CH262326, et présente les mêmes inconvénients de robustesse au niveau du maintien de la lunette.

Il existe donc un besoin pour une solution permettant de fixer une lunette exempte des inconvénients de l'art antérieur suscités, en proposant notamment un montage simple et facile à mettre en oeuvre, avec des coûts de production réduits.

Ces buts sont atteints grâce à une méthode de fixation d'une lunette 1 de montre, ladite montre comportant un boîtier 3 et une glace 2, la méthode étant caractérisée en ce qu'elle comprend une étape de crochage de la lunette 1 sur la glace 2, durant laquelle des moyens d' accrochage 6 de la glace 1 à la lunette 2 sont guidés par des moyens de guidage 5 agencés sur le boîtier 3, et que les moyens de guidage 5 font office de moyens de maintien pour les moyens d'accrochage 6 contre la glace 2.

Ces buts sont également atteints grâce à un dispositif pour la fixation d'une lunette 1 de montre, comportant un boîtier 3 et une glace 2, le dispositif étant caractérisé en ce que la lunette 1 comprend des moyens d'accrochage 6 à la glace 2 et le boîtier 3 comprend des moyens de guidage 5 pour les moyens d'accrochage 6, qui font également office de moyens de maintien pour les moyens d'accrochage 6 contre la glace 2 .

Un avantage de la solution proposée est de fixer la lunette sur la glace et non pas sur le boîtier directement, de telle sorte que l'assemblage est facilité.

Un autre avantage de la solution proposée est de garantir une meilleure robustesse et une meilleure tenue de la lunette, avec une très forte limitation du jeu vertical par rapport aux solutions usuelles de clipsage.

Un avantage additionnel est de ne requérir aucun outillage particulier pour le montage.

Ainsi les coûts de fabrication sont réduits grâce à la simplification de l'outillage requis pour l'usinage des pièces ainsi que leur montage; par ailleurs la réduction du temps de mise en oeuvre permet d'augmenter le débit et donc de gagner en efficacité pour la production.

D'autres caractéristiques et avantages ressortiront plus clairement de la description détaillée de divers modes de réalisation et des dessins annexés, sur lesquels:
- la figure 1 montre une vue en perspective d'une lunette et d'une glace selon un mode de réalisation préférentiel de l'invention, vues par dessus;
- la figure 2 montre une vue en perspective d'une lunette et d'une glace selon un mode de réalisation préférentiel de l'invention, vues par dessous;
- la figure 3 montre une vue en perspective d'une lunette, d'une glace et d'un boîtier selon un mode de réalisation préférentiel de l'invention, vues par-dessus;
- la figure 4 montre une vue en perspective partielle d'une lunette, d'une glace et d'un boîtier selon un mode de réalisation préférentiel de l'invention, vues par-dessus une fois la glace assemblée au boîtier;
- la figure 5 montre une vue en coupe des modes de réalisation préférentiels illustrés par les figures 1 à 4 après assemblage de la lunette à la glace.

L'invention fait intervenir la notion de crochage ou de clipsage qui implique une déformation élastique d'éléments lors du montage, sans toutefois nécessiter de forces de frottement pour le maintien en position assemblée, au contraire du chassage, aussi qualifié de sertissage dans la bijouterie notamment. Le crochage se distingue ainsi du chassage en ce que des forces de déformation agissant sur les éléments de crochage sont censées se dissiper une fois le crochage effectué, les éléments de crochage reprenant alors leur forme normale telle qu'ils l'avaient au repos avant l'opération de crochage.

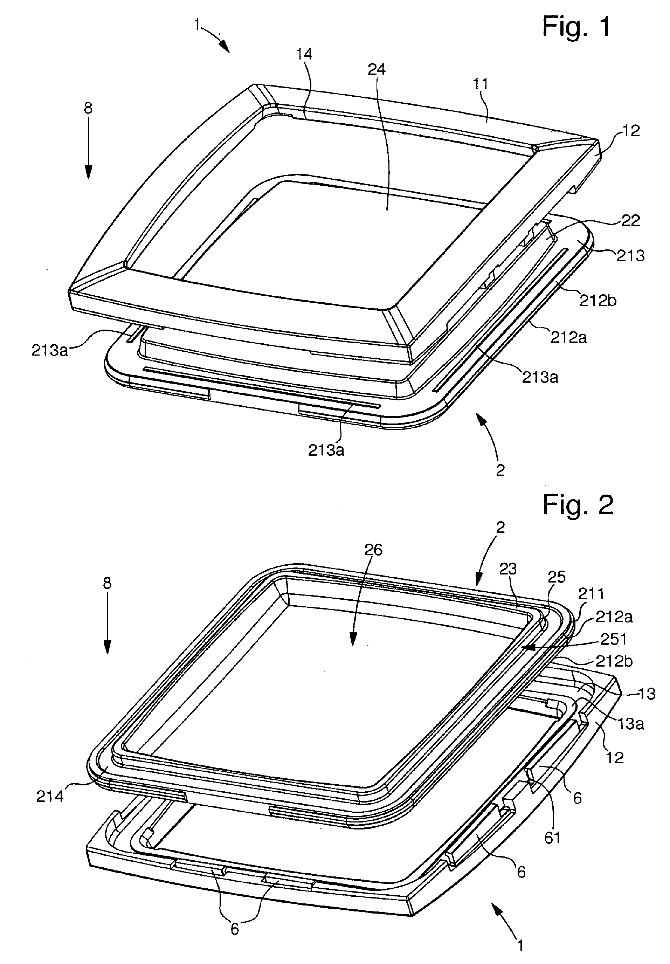

La figure 1 illustre une lunette 1 et une glace 2 non assemblées selon une variante préférentielle de l'invention, qui concerne une lunette 1 et glace 2 en plastique de forme carrée, vue de dessus.

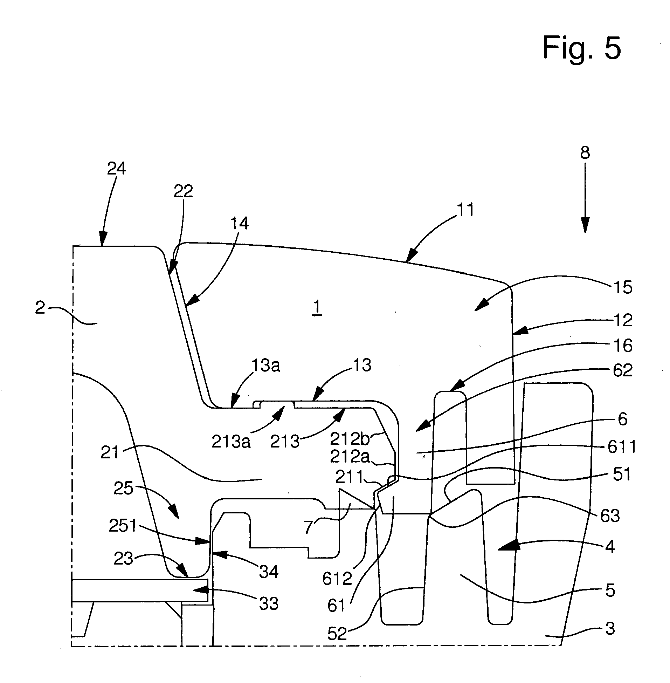

On peut distinguer, sur la lunette 1, les parois latérales externes 12 sensiblement verticales et une face externe supérieure 11 formant une surface quasiment horizontale, légèrement bombée pour épouser au mieux les contours de la surface de la glace 2, et notamment la face externe supérieure de la glace 24. Comme on le verra plus tard au vu de la figure 5 notamment, le bord latéral interne 14 de la lunette 1 est destiné à affleurer au bord latéral externe 22 de la glace 2, une fois le montage effectué. Ce montage s'effectue selon la direction verticale 8 indiquée par la flèche; cette direction est sensiblement perpendiculaire au plan formé par la face externe supérieure de la glace 2.

Sur la figure 1 on peut également voir que la glace 2 possède un rebord périphérique 21, sur la face supérieure 213 duquel sont disposés des petits bourrelets 213a, de préférence sur chacune des quatre faces de la glace carrée. Ces bourrelets 213a constituent des moyens de positionnement axiaux de la lunette 1 par rapport à la glace 2; ils coopèrent en effet avec le bourrelet annulaire interne 13a de la lunette, visible sur la figure suivante, afin de limiter la course radiale de la lunette lors de l'opération de crochage, ainsi que le jeu latéral après l'opération de crochage. Ce bourrelet annulaire 13a situé sur la lunette constitue des moyens de positionnement axiaux complémentaires de la lunette 1 par rapport à la glace 2, puisqu'il arrivera en butée sur chacun des bourrelets 213a lors de l'opération de crochage, expliquée en détail plus loin au vu de la figure 5.

On peut également discerner, sur la glace 2, deux surfaces distinctes de la paroi latérale 212 du rebord périphérique de la glace 21: une surface 212a, verticale, ainsi qu'une partie légèrement inclinée 212b au dessus de cette surface 212a verticale. Cet agencement permet une déformation progressive des éléments de crochage 6 (non visibles sur cette figure) lors du montage et de faciliter parallèlement son glissement. On peut également constater que la paroi 212a verticale est beaucoup moins haute que la paroi inclinée, pour exercer le moins longtemps possible une déformation maximale sur les éléments de crochage 6, représentés sur la figure suivante. Elle permet ainsi, en minimisant la durée pendant laquelle les forces de déformation les plus intenses sont appliquées, de réduire le fluage sur les éléments de crochage 6.

Selon la variante préférentielle illustrée non seulement sur la figure 1, mais également sur toutes les autres figures, la lunette est de forme carrée; toutefois n'importe quelle autre forme géométrique (ronde, ovale, trapézoïdale...) pourrait être envisagée dans le cadre de l'invention. Similairement, l'inclinaison des parois formant le bord de la glace ou de la lunette pourraient être modifiées pour des considérations esthétiques ou fonctionnelles, comme par exemple la facilité d'usinage des pièces, sans altérer la méthode ni le dispositif de fixation de l'invention.

La figure 2, qui illustre une vue symétrique par rapport à la figure 1 par rapport au plan horizontal, laisse apparaître les faces internes de la glace 26 et de la lunette 13. On peut toujours distinguer clairement le rebord périphérique 21 de la glace, dont on voit désormais la face interne 214, ainsi que le support de la glace 25, dont on distingue la face externe 251, qui est destiné à venir en contact avec le boîtier 3, représenté sur la figure suivante, par l'intermédiaire de la surface de contact 23. Bien que selon cette variante le support de la glace 25 s'étende sans discontinuité le long des 4 faces de la glace 2, on pourra imaginer que le support est formé par des pieds, par exemple un sur chaque face, et destinés à être emmanchés à force dans des orifices du boîtier 3. L'intérêt de la variante selon ce mode de réalisation préférentiel illustré est qu'il augmente la surface de contact 23 et permet ainsi une meilleure tenue de la glace 2 sur le boîtier 3 lors de sa fixation par exemple par collage.

On peut également désormais discerner, selon le mode de réalisation préférentiel illustré par la figure 2, une surface 211 au dessus des surfaces 212a et 212b, déjà visibles sur la figure précédente. Cette surface 211 est la surface d'accrochage de la glace 2, elle coopère avec les éléments de crochage 6 situés sur les différentes faces de la lunette 1, qui contiennent chacune de préférence plus d'un élément de crochage 6, par exemple deux comme représenté sur cette figure2. Chaque élément de crochage 6 comprend une partie protubérante 61 formant un nez de crochage, et qui comprend une surface d'accrochage 611, visible plus loin sur la figure 5 mais pas sur cette figure, qui coopère avec la surface d'accrochage 211 de la glace 2 pour le maintien de la lunette en position fixée sur la glace 2. Cette surface 211 est orientée de manière légèrement oblique par rapport à la direction du montage 8 pour permettre, similairement à la surface inclinée 212b, un meilleur glissement mutuel des éléments de crochage 6 par rapport à la glace lors du crochage. La déformation inverse pour le retour vers la position de repos s'effectue ainsi également plus progressivement.

La direction pour l'assemblage de la lunette 1 sur la glace 2, indiquée par la flèche 8 dans le même sens qu'à la figure précédente, alors qu'elle devrait théoriquement être dirigée dans l'autre sens pour des raisons de symétrie, permet, avec les formes géométriques utilisées pour la lunette 1, de la fixer sur la glace 2 alors que la glace est maintenue immobile durant l'étape de chassage. Cette caractéristique peut être intéressante pour simplifier l'outillage nécessaire au montage, en évitant un outillage complexe et coûteux comme des presses hydrauliques ou pneumatiques, car une simple potence peut suffire pour fixer la lunette sur la glace. La préhension de la lunette 1 étant a priori plus facile que celle de la glace 2, on pourra privilégier ce mode de fixation de la lunette 1 sur la glace 2, selon lequel le sens de montage 8 est dirigé de la lunette 1 vers la glace 2 (vers le haut sur la figure); toutefois, il est aussi envisageable, dans le cadre de l'invention, de fixer la glace 2 sur la lunette 1, avec un sens de montage 8 qui serait alors inversé et qui correspond à celui indiqué sur la figure 2.

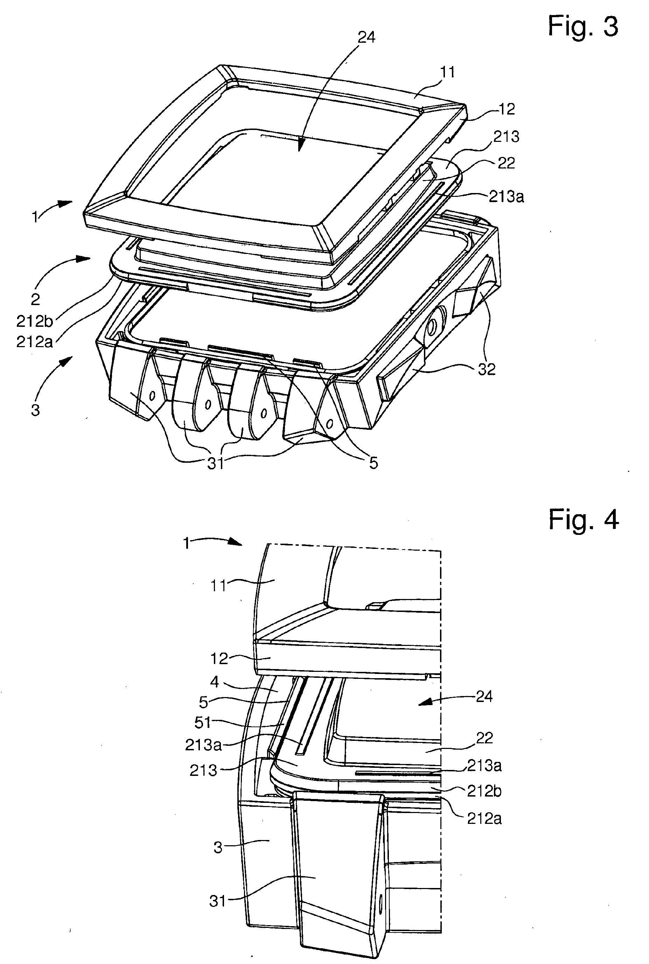

La figure 3 consiste en un complément de la figure 1, montrant une vue en perspective de dessus de la lunette 1, la glace 2, comme sur la figure 1, mais avec désormais un boîtier 3 en dessous de la glace 2. Comme les pièces sont assemblées les unes sur les autres selon l'ordre indiqué sur la figure, c'est-à-dire la glace 2 sur le boîtier 3 et la lunette 1 sur la glace 2, toutes les références sont ainsi identiques à celles de la figure 1 en ce qui concerne la lunette 1 (face externe supérieure 11 et paroi latérale externe 12) et la glace 2 (face externe supérieure de la glace 24, bord latéral externe de la glace 22, face supérieure du rebord périphérique de la glace 213, le bourrelet de la face supérieure du rebord périphérique de la glace 213a, et la paroi latérale 212 du rebord périphérique de la glace 21, avec les deux sous parties formées par les surfaces 212a verticale et 212b inclinée). Sur le boîtier 3, on peut distinguer des moyens d'attache pour bracelet 31 ainsi que les boutons poussoirs 32, mais surtout visualiser les moyens de guidage 5 qui seront utilisés lors de l'assemblage de la lunette 1 sur la glace 2, ainsi que des surfaces de centrage 34 pour le montage de la glace 2 dans le boîtier 3, qui permettent un positionnement axial correct de la glace 2 par rapport au boîtier 3. Ces surfaces de centrage 34 sont de préférence au nombre de 2 par face, mais ne font pas nécessairement tout le tour du boîtier 3. Le fait qu'une précision d'usinage ne soit pas requise sur la totalité du pourtour du boîtier 3 permet d'économiser des coûts tant au niveau de l'outillage que du temps requis pour la fabrication de l'ensemble boîtier 3 - glace 2 - lunette 1.

La figure 4 illustre une vue partielle agrandie des mêmes éléments que la figure précédente, mais cette fois alors que la glace 2 est apposée sur le boîtier 3. Selon un mode de réalisation préférentiel de l'invention, la méthode de fixation de la lunette 1 selon l'invention contient en effet une étape préalable de fixation de la glace 2 au boîtier 3, par exemple par collage. La lunette 1 n'est crochée qu'ensuite, ce qui permet de la crocher directement sur la glace 2 et non pas sur le boîtier 3. La taille légèrement inférieure de la glace 2 par rapport au boîtier 3 permet ainsi d'effectuer un crochage sur l'extérieur de la glace 2 dans un évidement du boîtier 4 tout en cachant les éléments d'accrochage 6; un tel crochage aurait nécessité un usinage plus délicat dans le boîtier 3 s'il avait dû être effectué directement dans le boîtier 3, puisqu'il aurait fallu réaliser un prolongement de forme concave de la cavité réalisée pour permettre l'accrochage des moyens d'accrochage 6.

Sur la figure 4, on distingue encore une fois les face externe supérieure 11 et paroi latérale externe 12 de la lunette 1, ainsi que face externe supérieure 24 de la glace 24, le bord latéral externe de la glace 22, la face supérieure du rebord périphérique de la glace 213, le bourrelet de la face supérieure du rebord périphérique de la glace 213a, et la paroi latérale 212 du rebord périphérique de la glace 21, avec les deux sous parties formées par les surfaces 212a verticale et 212b inclinée. On voit par contre plus en détail l'évidement 4 à la périphérie du boîtier 3, ainsi que les moyens de guidage 5, qui consistent en des « contre-clips » coopérant avec les « clips » 6 que sont les moyens d'accrochage visibles par exemple sur la figure 2. On peut constater que les moyens de guidage 5 présentent une surface inclinée 51 à leur extrémité supérieure visible, tandis qu'une autre surface, cachée sur cette figure mais représentée plus loin sur la vue en coupe de la figure 5, est sensiblement verticale. Cette surface inclinée 51, oblique par rapport à la direction de montage, permet le guidage des éléments d'accrochage 6 vers l'intérieur du boîtier 3.

La figure 5 montre une vue en coupe de la variante préférentielle illustrée sur les figures précédentes, et qui permet de comprendre le mécanisme d'assemblage des différentes pièces de l'invention. Selon cette variante préférentielle, la structure des différents éléments impliqués dans le crochage sont intégrés respectivement à la lunette 1 et au boîtier 3: les moyens d'accrochage 6 sont en effet formés d'un seul bloc avec la lunette, sur son rebord périphérique 15 - visible sur la figure 5 décrite ci-après - tandis que les moyens de guidage 5 sont également formés d'un seul bloc dans le boîtier 3. Cette variante préférentielle permet d'améliorer la tenue entre les moyens de crochage 6 et la lunette 1, d'une part, et les moyens de guidage 5 et le boîtier, d'autre part. Selon une variante préférentielle de l'invention, les pièces monobloc sont obtenues directement après un seul moulage ; elles pourraient toutefois aussi être obtenues par un usinage de reprise après moulage.

La figure 5 est une vue en position assemblée, après l'opération de crochage. On peut constater que les moyens d'accrochage sont donc formés d'un seul tenant avec la lunette, et qu'ils contiennent une partie protubérante 61 sur laquelle est agencée une surface d'accrochage 611, qui vient se positionner sous une surface d'accrochage de la glace 211 avec laquelle elle est en contact en position assemblée. La surface d'accrochage prolonge la face interne des moyens d'accrochage 62, qui forment une paroi sensiblement verticale 62 en contact avec la partie verticale 212a de la paroi latérale 212 du rebord périphérique de la glace 21. La lunette 1 prend ainsi en tenaille et pince le rebord périphérique de la glace 21 entre sa face interne 13 et la surface d'accrochage 611 des moyens d'accrochage, qui prolongent cette face interne sans discontinuité. On peut constater sur cette figure qu'en position assemblée, la lunette 1 recouvre le rebord périphérique 21 de la glace 2, et que le bord latéral interne 14 de ladite lunette 1 affleure au bord latéral externe 22 de la glace 2 tandis que la face externe supérieure 24 de la glace 2 prolonge la face externe supérieure 11 de la lunette 1, de telle sorte qu'il n'y ait aucune discontinuité entre la lunette 1 et la glace 2. Les dimensions de la lunette 11 pourront par ailleurs être choisies de préférence qu'il y ait le moins de discontinuité possible entre la paroi latérale externe de la lunette 12 et l'extérieur du boîtier 3 (non visible sur la figure 5) pour des questions d'esthétiques et de maniabilité, afin d'éviter toute forme trop anguleuse de la montre ainsi obtenue.

Selon la variante préférentielle illustrée sur la figure 5, le boîtier 3 comprend un cadran 33, contre lequel la surface de contact interne 23 de la glace 2, agencée sur la partie inférieure du support 25 de la glace 2 est destinée à être amenée en contact. Comme indiqué précédemment, la glace 2 peut de préférence être fixée au boîtier 3 avant de crocher la lunette 1 sur la glace 2. A cet effet des moyens de fixation 7 de la glace 2 au boîtier 3 sont prévus, qui peuvent consister par exemple en de la colle, ou selon la variante préférentielle illustrée une portion du boîtier 3 qui sera fondue lors d'une opération de soudage. La portion correspondant aux moyens de fixation 7 a été laissée sur la figure 5 pour permettre une meilleure compréhension du mécanisme de fixation et de visualiser les moyens de fixation 7; l'homme du métier comprendra toutefois qu'en position assemblée telle qu'illustrée, cette portion a disparu. On pourra également remarquer sur la figure 5 qu'aucun moyen de fixation n'est prévu entre la surface de contact interne 23 de la glace 2 et le cadran. Bien que de tels moyens de fixation soient possibles, la solution de l'invention s'en dispense et permet ainsi d'économiser une étape de montage superflue.

Les surfaces de centrage 34 du boîtier 3, visibles précédemment sur la figure 3, sont également visibles sur la figure 5. On peut constater sur cette vue en coupe que le positionnement axial de la glace 2 par rapport au boîtier 3 est assuré par la coopération de ces surfaces de centrage 34 avec les faces externes du support de la glace 251 sur chacun des quatre côtés. Un léger emmanchement à force de la glace 2 contre ces surfaces de centrage 34 pourrait être effectué, selon une variante préférentielle de l'invention, afin de garantir la tenue de la glace 2 même sans collage ni soudage. Un tel chassage permettrait du reste d'éviter tout jeu axial lors de la fixation ultérieure de ces deux pièces l'une à l'autre, par exemple par soudage.

Lors de l'étape de crochage, une surface de glissement 612 située sous la surface d'accrochage 611 sur la partie protubérante 61 des moyens d'accrochage 6 glisse sur la partie inclinée 212b de la paroi latérale du rebord périphérique de la glace, ce qui déforme progressivement les moyens d'accrochage 6 lors de l'enfoncement du déplacement de la lunette 1 dans le sens de montage 8. La déformation est maximale lors de la coopération avec la partie verticale 212a de la paroi latérale 212 du rebord périphérique de la glace 21, et donc sur une course limitée puisque la hauteur de cette partie 212a de la paroi est choisie relativement petite par rapport à la hauteur de la partie inclinée. Lors de la descente des moyens d'accrochage 6 sur cette partie 212a de la paroi, le talon 63 des moyens d'accrochage 6 entre en contact avec les moyens de guidage 5, et plus exactement avec une première surface 51 des moyens de guidage, qui guide les moyens d'accrochage 6 en partie vers l'intérieur du boîtier 3, et par conséquent vers la glace 2, ce qui tend à redresser les moyens d'accrochage 6 pour leur restituer leur forme initiale. Cette première surface 51 des moyens de guidage 5 prolonge une deuxième surface 52, beaucoup plus verticale, qui donne aux moyens de guidage 5 une forme de lame verticale selon le mode de réalisation illustré. Ces lames forment ainsi une contre-lame pour les moyens d'accrochage 6, illustrés sous forme de clips, en les guidant dans la direction contraire à celle de leur déformation vers l'extérieur. On peut remarquer que cette première surface 51 est non seulement oblique par rapport à la direction du montage 8, mais aussi sensiblement parallèle aux surfaces 211 et 611 d'accrochage respectivement de la lunette et des moyens d'accrochage.

Avec cet agencement des éléments de guidage 5 et des éléments d'accrochage 6 susmentionnés, on peut constater que les moyens de guidage 5 font également office de moyens de maintien des éléments d'accrochage 6 contre la glace 2, une fois la lunette 2 assemblée à la glace 1. En effet la force de poussée exercée par les moyens de guidage 5 par l'intermédiaire de la première surface de guidage 51 contre le talon 63 des moyens d'accrochage 6 a certes une composante horizontale, qui permet le guidage vers l'intérieur lors de l'opération de crochage, mais elle comprend également une composante verticale, dans le sens inverse de celui du montage 8. Ainsi les moyens de guidage 5 plaquent de façon permanente le nez de crochement formé par la partie protubérante 61 contre la glace 2. Plus exactement, la composante verticale de la force exercée par les moyens de guidage 5 plaque la surface d'accrochage 611 des moyens d'accrochage contre la surface d'accrochage 211 de la glace 2, ce qui évite la formation de jeu vertical, tandis que la composante horizontale plaque une partie de la surface interne 62 des moyens d'accrochage 6 contre la partie verticale 212a de la paroi latérale 212 du rebord périphérique de la glace 21, ce qui évite la formation de jeu horizontal, même après fluage du matériau plastique. Selon le mode de réalisation illustré, l'agencement entre les moyens de crochage 6 et les moyens de guidage 5 est ainsi tel que la déformation élastique perdure pour exercer la force de plaquage de la partie protubérante 61 des moyens d'accrochage 6 contre la lunette 2. On pourrait toutefois imaginer qu'en position assemblée, le talon 63 des moyens d'accrochage 6 affleure simplement à la première surface 51 des moyens de guidage, de telle sorte qu'ils empêchent tout décrochage du la partie protubérante 61, sans pour autant exercer de force de plaquage permanente.

La méthode et le dispositif de fixation selon l'invention permettent par conséquent de renforcer la tenue du crochage, afin d'éviter tout arrachement de la lunette 1. Des prototypes ont été fabriqués basés sur ce modèle et une force de tenue moyenne d'environ 15 Newtons a été constatée. Afin que la lunette 1 puisse être arrachée encore moins facilement, on pourra noyer la lunette 1 dans le boîtier 3 après l'étape de crochage. L'homme du métier comprendra que l'on peut aisément exécuter cette variante en introduisant par exemple de la colle dans l'évidement 4 du boîtier 3 lorsque la lunette 1 est assemblée à la glace 2, comme illustré sur la figure 5, bien que selon le mode de réalisation illustré par cette dernière figure on ne peut pas distinguer de moyens de fixation dans l'évidement 4 du boîtier 3.

Durant l'étape de crochage où les moyens d'accrochage 6 sont légèrement déformés vers l'extérieur, le positionnement axial de la glace 2 par rapport à la lunette est assuré par des moyens de positionnement axiaux 13a et 213a disposés respectivement sur le dessous de la lunette 1, dans le prolongement de la surface de la face interne 13 de la lunette, et sur la face supérieure 213 du rebord périphérique 21 de la glace. Ces moyens évitent tout déplacement de la lunette 1 vers l'extérieur dès leur arrivée en butée mutuelle les uns par rapport aux autres, ils garantissent ainsi une limitation du jeu latéral une fois l'opération de crochage effectuée. Selon le mode de réalisation préférentiel illustré, les moyens de positionnement axiaux 213a de la glace 2 consistent en quatre petits bourrelets disposés sur chacune des faces supérieures 213 du rebord périphérique de la glace, visibles sur les figures 1,3 et 4 précédentes, tandis que les moyens de positionnement axiaux 13a de la lunette consistent en un bourrelet annulaire visible sur la figure 2. La vue en coupe de la figure 5 permet d'illustrer la butée axiale que forment les bourrelets de la glace 2 lorsque la lunette 1 tend à se déplacer vers l'extérieur du boîtier 3 en suivant la déformation des moyens d'accrochage 6. Le sens du montage 8 plaquant la face interne 13 de la lunette contre la face supérieure du rebord périphérique de la glace 2, l'épaisseur des bourrelets que forment ces moyens de positionnement axiaux 13a/213a n'a pas besoin d'être nécessairement très importante car le risque que la lunette saute par-dessus les moyens de positionnement axiaux 213a de la glace 2 est relativement faible étant donné que la force de plaquage est exercée dans le sens contraire. On pourra toutefois également remarquer que ces 4 bourrelets servent aussi à permettre la déformation de la lunette dans le sens vertical en laissant un jeu entre la face interne 13 de la lunette et la face supérieure 213 du rebord périphérique de la glace 2. Ce jeu permet précisément la déformation de la lunette dans le sens du montage 8 et de passer la partie protubérante 61 des moyens d'accrochage au dessous de la surface d'accrochage 211 de la glace.

Selon le mode de réalisation illustré par la figure 5, on peut constater que le rebord périphérique 15 de la lunette 1 contient une partie évidée 16, servant à faciliter la déformation élastique du clip, c'est-à-dire les moyens d'accrochage 6 de la lunette. Cette partie évidée 16 pourra ainsi être plus ou moins profonde selon la flexibilité requise des moyens d'accrochage 6. La forme de l'évidement 16 peut par ailleurs être choisie sensiblement complémentaire à celle des moyens de guidage 5, de telle sorte que ceux-ci puissent être recouverts une fois l'opération de crochage terminée.

L'homme du métier comprendra que d'autres variantes peuvent être envisagées en utilisant d'autre formes géométriques que celle de la variante illustrée, ainsi que d'autres orientations, plus ou moins obliques, des surfaces utilisées notamment pour l'accrochage. La solution de l'invention est aussi adaptée à une solution mixte pour les matériaux de la glace 2 et de la lunette 1; la glace 2 pourrait ainsi par exemple être constituée d'un matériau relativement dur ou en plastique, tandis que la lunette 1 pourrait être par exemple en métal, sans pour autant augmenter le jeu mutuel des pièces assemblées.

### LISTE DES REFERENCES

| | |
|---|---|
| 1 | Lunette |
| 11 | Face externe supérieure de la lunette |
| 12 | Paroi latérale externe de la lunette |
| 13 | Face interne de la lunette |
| 13a | Moyens de positionnement axiaux de la lunette par rapport à la glace: |
| 14 | Bord latéral interne de la lunette |
| 15 | Rebord périphérique de la lunette |
| 16 | Partie évidée du rebord périphérique la lunette |
| 2 | Glace |
| 21 | Rebord périphérique de la glace |
| 211 | Surface d'accrochage de la glace |
| 212 | Paroi latérale du rebord périphérique de la glace |
| 212a | Partie verticale de la paroi latérale |
| 212b | Partie inclinée de la paroi latérale |
| 213 | Face supérieure du rebord périphérique de la glace |
| 213a | Moyens de positionnement axiaux de la lunette par rapport à la glace: |
| 214 | Face interne du rebord périphérique de la glace |
| 22 | Bord latéral externe de la glace |
| 23 | Surface de contact interne de la glace |
| 24 | Face externe supérieure de la glace |
| 25 | Support de la glace |
| 251 | Face externe du support de la glace |
| 26 | Face interne de la glace |
| 3 | Boîtier |
| 31 | Moyens d'attache de bracelet |
| 32 | Poussoirs |
| 33 | Cadran |
| 34 | Surface de centrage du boîtier |
| 4 | Evidement dans le boîtier |
| 5 | Moyens de guidage (contre-clips) |
| 51 | Première surface des moyens de guidage |
| 52 | Deuxième surface des moyens de guidage |
| 6 | Moyens d'accrochage de la lunette |
| 61 | Partie protubérante des moyens d'accrochage |
| 611 | Surface d'accrochage des moyens d'accrochage |
| 612 | Surface de glissement des moyens d'accrochage |
| 62 | Face interne des moyens d'accrochage |
| 63 | Talon des moyens d'accrochage |
| 7 | Moyens de fixation de la lunette au boîtier |
| 8 | Sens du montage |

## Revendications

1. Méthode de fixation d'une lunette (1) de montre, ladite montre comportant un boîtier (3) et une glace (2), ladite méthode étant **caractérisée en ce qu'**elle comprend une étape de crochage de ladite lunette (1) sur ladite glace (2), durant laquelle des moyens d'accrochage (6) de ladite lunette (1) à ladite glace (2) sont guidés par des moyens de guidage (5) agencés sur ledit boîtier (3), et que les moyens de guidage (5) font également office de moyens de maintien desdits éléments d'accrochage (6) contre ladite glace (2).

2. Méthode de fixation d'une lunette (1) selon l'une des revendications précédentes, **caractérisée en ce qu'**elle comprend une étape préalable de fixation de ladite glace (2) audit boîtier (3).

3. Méthode de fixation d'une lunette (1) selon l'une des revendications précédentes, **caractérisée en ce que** ladite lunette (1) est noyée dans ledit boîtier (3) après l'étape de crochage.

4. Méthode de fixation d'une lunette (1) selon l'une des revendications
précédentes, **caractérisée en ce que** le positionnement axial de ladite glace (2) par rapport à ladite lunette (1) est assurée par des moyens de positionnement axiaux (213a, 13a) disposés respectivement sur la face interne de la lunette (13) et la face supérieure d'un rebord périphérique de la glace (213) durant l'étape de crochage.

5. Méthode de fixation d'une lunette (1) selon l'une des revendications précédentes, **caractérisée en ce que** l'étape de crochage consiste en une déformation élastique desdits moyens d'accrochage (6) puis du positionnement d'une surface d'accrochage (611) desdits moyens d'accrochage (6) sous une surface d'accrochage (211) de la glace située sur un rebord périphérique (21) de ladite glace (2).

6. Méthode de fixation d'une lunette (1) selon l'une des revendications précédentes, **caractérisée en ce que** le guidage desdits moyens d'accrochage (6) de ladite lunette (1) durant l'étape de crochage est effectué en partie vers l'intérieur dudit boîtier (3) par une première surface (51) desdits moyens de guidage (5), oblique par rapport à la direction du montage (8).

7. Dispositif pour la fixation d'une lunette (1) de montre, ladite montre comportant un boîtier (3) et une glace (2), ladite lunette (1) comprenant des moyens d'accrochage (6) à ladite glace (2), ledit dispositif étant **caractérisé en ce que** ledit boîtier (3) comprend des moyens de guidage (5) pour lesdits moyens d'accrochage (6), lesdits moyens de guidage étant agencés pour guider lesdits moyens d'accrochage (6) lors d'une étape de crochage de la lunette (1) sur ladite glace (2), lesdits moyens de guidage (5) faisant également office de moyens de maintien desdits éléments d'accrochage (6) contre ladite glace (2)

8. Dispositif pour la fixation d'une lunette (1) selon la revendication 7, **caractérisé en ce que** lesdits moyens d'accrochage (6) sont situés sur un rebord périphérique (15) de ladite lunette (2), et que les moyens de guidage (5) sont situés dans un évidement (4) à la périphérie dudit boîtier (3).

9. Dispositif pour la fixation d'une lunette (1) selon la revendication 8, **caractérisé en ce que** lesdits moyens d'accrochage (6) sont formés d'un seul bloc avec ladite lunette (1) et contiennent une partie protubérante (61) sur laquelle est agencée au moins une surface d'accrochage (611).

10. Dispositif pour la fixation d'une lunette (1) selon l'une des revendications 8 ou 9, ladite lunette (1) recouvrant ledit rebord périphérique (21) de ladite glace (2), un bord latéral interne (14) de ladite lunette (1) affleurant à un bord latéral externe (22) de ladite glace (2) et une face externe supérieure (24) de ladite glace (2) prolongeant une face externe supérieure (11) de ladite lunette (1).

11. Dispositif pour la fixation d'une lunette (1) selon l'une des revendications 7 à 10, au moins la lunette (1) et/ou la glace (2) et/ou le boîtier (3) étant constitués de matière plastique (3).

12. Dispositif pour la fixation d'une lunette (1) selon l'une des revendications 7 à 11, ladite lunette (1) comprenant des moyens de positionnement axiaux (13a) disposés sur la face interne de ladite lunette (13), et ladite glace (2) comprenant des moyens de positionnement axiaux (213a) disposés sur la face supérieure d'un rebord périphérique de la glace (213).

13. Dispositif pour la fixation d'une lunette (1) selon l'une des revendications 7 à 12, **caractérisé en ce que** lesdits moyens de guidage (5) comprennent une première surface de guidage (51) sensiblement parallèle à des surfaces d'accrochage (211,611) de ladite lunette (2) et desdits moyens d'accrochage (6).

## Patentansprüche

1. Verfahren zum Befestigen einer Lünette (1) einer Uhr, wobei die Uhr mit einem Gehäuse (3) und einem Glas (2) versehen ist, wobei das Verfahren **dadurch gekennzeichnet ist, dass** es einen Ankopplungsschritt der besagten Lünette (1) auf das besagte Glas (2) umfasst, während welchem Verklinkungsmittel (6) der besagten Lünette (1) an das besagte Glas (2) durch auf dem Gehäuse (3) angeordnete Führungsmittel (5) geführt sind, und dass die besagten Führungsmittel (5) auch gleichzeitig als Haltemittel für die besagten Verklinkungsmittel (6) gegen das besagte Glas (2) wirken.

2. Verfahren zum Befestigen einer Lünette (1) einer Uhr nach Anspruch 1, **dadurch gekennzeichnet, dass** es zunächst eine Befestigungsschritt des besagten Glases (2) an dem Gehäuse (3) umfasst.

3. Verfahren zum Befestigen einer Lünette (1) nach einem der vorigen Ansprüche, **dadurch gekennzeichnet, dass** die besagte Lünette (1) nach dem Ankopplungsschritt in dem besagten Gehäuse (3) eingeklebt ist.

4. Verfahren zum Befestigen einer Lünette (1) nach einem der vorigen Ansprüche, **dadurch gekennzeichnet, dass** die axiale Positionierung des Glases (2) in Bezug auf der Lünette (1) während des Ankopplungsschritts durch axiale Positionierungsmittel (213a, 13a) gewährleistet ist, die jeweils an der Innenfläche (13) der Lünette und der oberen Fläche (213) eines äusseren Rands des Glases angeordnet sind.

5. Verfahren zum Befestigen einer Lünette (1) nach einem der vorigen Ansprüche, **dadurch gekennzeichnet, dass** der Ankopplungsschritt zuerst in einer elastischen Verformung der besagten Verklinkungsmittel (6), und dann in der Positionierung einer Rastfläche (611) der besagten Verklinkungsmittel (6) unter einer Greiffläche (211) des Spiegels an einem äusseren Rand (21) des Glases (2) angeordnet ist.

6. Verfahren zum Befestigen einer Lünette (1) nach einem der vorigen Ansprüche, **dadurch gekennzeichnet, dass** die Führung der besagten Verklinkungsmittel (6) während des Ankopplungsschritts teilweise auf die Innenseite des Gehäuses (3) durch eine erste, schräg zur Montagerichtung (8) angeordnete Oberfläche (51) der besagten Führungsmittel (5) ausgeführt ist.

7. Vorrichtung zum Befestigen einer Lünette (1) einer Uhr, wobei die Uhr ein Gehäuse (3) und ein Glas (2) umfasst, wobei die Lünette (1) Verklinkungsmittel (6) an das besagte Glas (2) aufweist, wobei die besagte Vorrichtung **dadurch gekennzeichnet ist, dass** das besagte Gehäuse (3) Führungsmittel (5) für die Verklinkungsmittel (6) umfasst, wobei die besagten Führungsmittel (5) derart angeordnet sind, dass sie die besagten Verklinkungsmittel (6) während des Ankopplungsschritts der besagten Lünette (1) an das besagte Glas (2) führen, und dass die besagten Führungsmittel (5) auch gleichzeitig als Haltemittel für die besagten Verklinkungsmittel (6) gegen das besagte Glas (2) wirken.

8. Vorrichtung zum Befestigen einer Lünette (1) nach Anspruch 7, **dadurch gekennzeichnet, dass** die Verklinkungsmittel (6) an einem Umfangsrand (15) der besagten Lünette (1) angeordnet sind, und dass die Führungsmittel (5) in einer Ausnehmung (4) am Rand des Gehäuses (3) angeordnet sind.

9. Vorrichtung zum Befestigen einer Lünette (1) nach Anspruch 8, **dadurch gekennzeichnet, dass** die Verklinkungsmittel (6) einstückig mit der Lünette (1) ausgebildet sind, und einen hervorstehenden Teil (61) aufweisen, worauf mindestens eine Rastfläche (611) angeordnet ist.

10. Vorrichtung zum Befestigen einer Lünette (1) nach Anspruch 8 oder 9, wobei die besagte Lünette (1) den besagten äusseren Rand (21) des Glases bedeckt, wobei eine innere Seitenkante (14) der besagten Lünette (1) nivelliert mit einer äußeren Seitenkante (22) des besagten Glases (2) ausgebildet ist, und wobei eine äußere Oberfläche (24) des besagten Glases (2) nach einer oberen Außenfläche (11) der besagten Lünette (1) weiterzieht.

11. Vorrichtung zum Befestigen einer Lünette (1) nach einem der Ansprüche 7 bis 10, wobei mindestens die Lünette (1) und/oder das Glas (2) und/oder das Gehäuse (3) aus Kunststoffmaterial bestehen.

12. Vorrichtung zum Befestigen einer Lünette (1) nach einem der Ansprüche 7 bis 11, wobei die Lünette (1) axiale Positionierungsmittel (13a) aufweist, die an der Innenfläche (13) der Lünette (1) angeordnet sind, und wobei das Glas (2) axiale Positionierungsmittel (213a) aufweist, die auf der oberen Fläche (213) eines äusseren Rands des Glases angeordnet sind.

13. Vorrichtung zum Befestigen einer Lünette (1) nach einem der Ansprüche 7 bis 12, **dadurch gekennzeichnet, dass** die Führungsmittel (5) eine erste Führungsfläche (51) aufweisen, die im Wesentlichen parallel jeweils zu der Greiffläche (211) des besagten Glases (2) und der Rastfläche (611) der besagten Verklinkungsmittel (6) angeordnet sind.

## Claims

1. Method of securing a watch bezel (1), said watch including a case (3) and a crystal (2), wherein said method is **characterized in that** it includes a step of snap fitting said bezel (1) onto said crystal (2), during which snap fit means (6) of said bezel (1) to said crystal (2) are guided by guide means (5) arranged on said case (3), and **in that** the guide means (5) also serve as means for holding said snap fit means (6) against said crystal (2).

2. Method of securing a bezel (1) according to claim 1, **characterized in that** it includes a prior step of securing said crystal (2) to said case (3).

3. Method of securing a bezel (1) according to any of the preceding claims, **characterized in that** said bezel (1) is embedded in said case (3), after the snap fit step.

4. Method of securing a bezel (1) according to any of the preceding claims, **characterized in that** the axial positioning of said crystal (2) relative to said bezel (1) is ensured by axial positioning means (213a, 13a) arranged respectively on the internal face (13) of the bezel and the top face of a peripheral edge of the bezel (213) during the snap fit step.

5. Method of securing a bezel (1) according to any of the preceding claims, **characterized in that** the snap fit step consists in an elastic deformation of said snap fit means (6), then positioning a snap fit surface (611) of said snap fit means (6) underneath a snap fit surface (211) of the crystal located on a peripheral edge (21) of said crystal (2).

6. Method of securing a bezel (1) according to any of the preceding claims, **characterized in that** said snap fit means (6) of said bezel (1) is guided during the snap fit step partly towards the interior of said case (3) by a first surface (51) of said guide means (5), which is oblique relative to the direction of assembly (8).

7. Device for securing a watch bezel (1), wherein said watch includes a case (3) and a crystal (2), said bezel (1) includes snap fit means (6) to said crystal (2), said device being **characterized in that** said case (3) includes guide means (5) for said snap fit means (6), wherein said guide means (5) are arranged to guide said snap fit means (6) during a snap fitting step of said bezel (1) onto said crystal (2), wherein said guide means (5) also serve as means for holding said snap fit means (6) against said crystal (2).

8. Device for securing a bezel (1) according to claim 7, **characterized in that** said snap fit means (6) are located on a peripheral edge (15) of said bezel (2) and **in that** the guide means (5) are located in a recess (4) at the periphery of said case (3).

9. Device for securing a bezel (1) according to claim 8, **characterized in that** said snap fit means (6) forms a single unit with said bezel (1) and contains a protruding portion (61) on which at least one snap fit surface (611) is arranged.

10. Device for securing a bezel (1) according to any of claims 8 or 9, said bezel (1) covering said peripheral edge (21) of said crystal (2), an internal lateral edge (14) of said bezel (1) being flush with an external lateral edge (22) of said crystal (2) and a top external edge (24) of said crystal (2) extending a top external face (11) of said bezel (1).

11. Device for securing a bezel (1) according to any of claims 7 to 10, at least the bezel (1) and/or the crystal (2) and/or the case (3) being formed of plastic material (3).

12. Device for securing a bezel (1) according to any of claims 7 to 11, said bezel (1) including axial positioning means (13a) arranged on the internal face (13) of said bezel, and said crystal (2) including axial positioning means (213a) arranged on the top face of a peripheral edge of the bezel (213).

13. Device for securing a bezel (1) according to any of claims 7 to 12, **characterized in that** said guide means (5) includes a first guide surface (51) substantially parallel to the snap fit surfaces (211, 611) of said bezel (2) and said snap fit means (6).
